# EUROPÄISCHE PATENTSCHRIFT

(11) **EP 1 158 012 B1**
(45) Veröffentlichungstag und Bekanntmachung des Hinweises auf die Patenterteilung: **01.12.2004**
(21) Anmeldenummer: 01111256.2
(22) Anmeldetag: 16.05.2001
(51) Int. Cl.: C08G 18/69, C08G 59/34

(54) **Hartgummi-Beschichtungen für den Korrosionsschutz**
Ebonite coatings for corrosion resistance
Revêtements d'ébonite pour protection contre la corrosion

(30) Priorität: 23.05.2000 DE 10025356
(43) Veröffentlichungstag der Anmeldung: 28.11.2001
(73) Patentinhaber: SGL Acotec GmbH, 56427 Siershahn (DE)
(72) Erfinder: Hölter, Dirk, Dr., 56170 Bendorf (DE); Burkhart, Thomas, Dr., 56410 Montabaur (DE); Hessel, Gerd, 56244 Ötzingen (DE)
(74) Vertreter: Deckers, Hellmuth, Dr.

(56) Entgegenhaltungen:
- EP-A- 0 318 878
- US-A- 4 343 339
- US-A- 5 064 896
- US-A- 5 766 687

## Beschreibung

Die Erfindung bezieht sich auf Hartgummi-Beschichtungen für den Korrosionsschutz.

Hartgummi-Beschichtungen oder Gummierungen werden seit Jahrzehnten als Korrosionschutz für Stahl- und Betonflächen eingesetzt. Traditionell werden dabei unvulkanisierte oder vorvulkanisierte Gummibahnen auf die zu schützende Fläche aufgeklebt und anschließend, soweit erforderlich, bei erhöhter Temperatur vulkanisiert. Bei sogenannten Werksgummierungen erfolgt dieser letzte Schritt in der Regel in einem Autoklaven unter Überdruck. Ein entscheidender Kostenfaktor ist bei diesem Verfahren der hohe Zeit- und Arbeitsaufwand, der für das Auskleiden der geometrisch oft anspruchsvollen Bauteile notwendig ist.

Daher ist es wünschenswert, ein System zu finden, das sich durch einfache Methoden (wie z.B. Spritzen oder Rollen) auftragen läßt und außerdem nicht auf die zusätzliche Verwendung von Klebstoffen angewiesen ist.

Seit einigen Jahren sind sogenannte "flüssige Hartgummis" mit einem Gehalt an niedermolekularen Polybutadienen bekannt, die im Gegensatz zu herkömmlichen Kautschukmischungen viskose Flüssigkeiten sind. Die damit hergestellten Beschichtungen weisen nach der Vulkanisation Eigenschaften eines Hartgummis auf.

Ein in der DE-A 37 40 181 beschriebenes System basiert auf einem niedermolekularen 1,4-*cis*-Polybutadien, dem neben Füllstoffen und Vulkanisationschemikalien zur Verbesserung von Chemikalienbeständigkeit und mechanischen Eigenschaften noch ein hocharomatisiertes Polybutadien, teilweise in Kombination mit einem Copolymer aus Isobutylen und Isopren, zugesetzt wird. Ein ähnliches, ebenfalls auf linearem 1,4-*cis*-Polybutadien aufgebautes System wurde durch O. Figovsky et al. beschrieben (Proceedings of International Conference: Corrosion in Natural and Industrial Environments: Problems and Solutions, Grado, 1995).

In der WO-A 98/22225 wird der Einsatz von epoxidierten niedermolekularen Polybutadienen als Basis für flüssige Hartgummis vorgeschlagen. Zusätzlich zum Vulkanisationsprozeß mittels Schwefel soll dabei noch eine Vernetzung durch Reaktion der Epoxidgruppen mit Aminen stattfinden. Eine Verbesserung der mechanischen Eigenschaften wird durch die Zugabe eines hochmolekularen Butadien-Nitril-Kautschuks erreicht.

Ein prinzipielles Problem bei der Verwendung flüssiger Kautschuke sind die bei Erwärmung eintretenden Fließprozesse. Diese führen vor allem bei dickeren Schichten zu einem Abfließen der noch nicht vernetzten bzw. vulkanisierten Mischung von nicht-horizontalen Flächen. Bisher beschriebene Mischungen, die durch Zusätze oder andere Mischungsverhältnisse so eingestellt sind, daß dieses Problem etwas weniger ausgeprägt ist, lassen sich aufgrund einer höheren Viskosität wiederum nur unter größerem Aufwand verarbeiten.

Es ist daher die Aufgabe der vorliegenden Erfindung, ein flüssiges Hartgummi-Beschichtungsmittel bereitzustellen, das eine niedrige Viskosität geeignet zur Spritzapplikation aufweist und bei der zur Vulkanisation erforderlichen anschließenden Erwärmung kein oder nur möglichst geringes Abfließen von nicht-horizontalen Wänden zeigt.

Überraschenderweise wurde gefunden, daß diese Anforderung erfüllt werden kann, wenn ein Beschichtungsmittel auf der Basis flüssiger Kautschuke, gegebenenfalls in Kombination mit einem niedrigviskosen Reaktivverdünner, unmittelbar nach der Applikation durch eine der Vulkanisation vorgeschaltete Vorpolymerisation bzw. Vorvernetzung soweit verfestigt wird, daß ein Abfließen weitgehend oder vollständig unterbunden wird. Dazu werden funktionalisierte Kautschuke mit solchen reaktiven Gruppen eingesetzt, die mit einem zugesetzten Kettenverlängerungs- oder Vernetzungsmittel unter Bildung bevorzugt kovalenter Bindungen reagieren und dabei verlängerte oder verzweigte Moleküle bilden.

Gegenstand der Erfindung ist daher ein Verfahren zum Beschichten von Substraten, umfassend die Schritte:
a) Mischen von Massenanteilen der folgenden Bestandteile:
   - 10 bis 90 %: mindestens eines funktionalisierten niedermolekularen Kautschuks **A,** wobei die funktionellen Gruppen von **A** ausgewählt sind aus Hydroxylgruppen, Carbonsäureanhydridgruppen, Carboxylgruppen, Aminogruppen und Isocyanatgruppen,
   - 1 bis 50 %: mindestens eines Vernetzungsmittels **B** mit gegenüber den funktionellen Gruppen des Kautschuks **A** reaktiven Gruppen, wobei die funktionellen Gruppen von **B** ausgewählt sind aus Hydroxylgruppen, Carbonsäureanhydridgruppen, Carboxylgruppen, Aminogruppen und Isocyanatgruppen, mit der Maßgabe, daß die funktionellen Gruppen der Komponenten **A** und der Komponente **B** so gewählt werden, daß durch die Reaktion zwischen diesen eine Bindung gebildet wird ausgewählt aus Urethangruppen, Estergruppen, Harnstoffgruppen und Säureamidgruppen,
   - 0,01 bis 10 %: Beschleuniger/Katalysatoren **C** für die Vemetxungsreaktion zwischen **A** und **B,**
   - 0 bis 60 %: Reaktivverdünner **D,**
   - 1 bis 50 %: Vulkanisationschemikalien **E,**
   - 5 bis 50 %: Füllstoffe **F** und Hilfsstoffe **G,**
   wobei die Summe der Massenanteile in der Mischung stets 100 % ergeben muß, und wobei mindestens eine der mittleren Funktionalitäten der Bestandteile **A** bzw. **B** mindestens 2 ist,
b) Auftragen der im Schritt a) hergestellten Mischung auf ein Substrat, wobei infolge der Reaktion der Komponente **A** mit der Komponente **B** die Viskosität der Mischung innerhalb von 30 Minuten auf mindestens das dreifache ansteigt, und
c) Vulkanisieren der Beschichtung auf dem Substrat durch Erhitzen.

Bevorzugt betragen in dem Verfahren die Massenanteile von **A** 15 bis 60, insbesondere 20 bis 50 %, besonders bevorzugt 22 bis 48 %, die des Vernetzungsmittels **B** 1,5 bis 45, insbesondere 2 bis 40 %; die der Beschleuniger **C** 0,02 bis 7 %, insbesondere 0,05 bis 5 %; die der Reaktivverdünner **D** 2 bis 55 %, insbesondere 5 bis 50 %; die der Vulkanisationschemikalien **E** 2 bis 45, insbesondere 5 bis 40 %, und schließlich die Summe der Masseanteile von Füll- und Hilfsstoffe **F** und **G** 7 bis 45, insbesondere 10 bis 40%.

Die Gegenwart des Vernetzungsmittels **B** ist für die Vorvernetzung bzw. Vorpolymerisation (= Kettenverlängerung) des niedermolekularen Kautschuks erforderlich. Der Ausdruck Vernetzungsmittel wird im folgenden aus Vereinfachungsgründen verwendet, es kann sich dabei prinzipiell aber auch um eine Verbindung (Kettenverlängerungsmittel) handeln, die in Kombination mit einem Kautschuk **A** nur zur Ausbildung eines linearen Polymeren führt.

Der funktionalisierte niedermolekulare Kautschuk **A** und das Vernetzungsmittel **B** für diesen Kautschuk befinden sich getrennt voneinander in jeweils einer anderen der beiden Komponenten eines Zwei-Komponenten-Systems, während die anderen Bestandteile **C** bis **G** beliebig über beide Komponenten verteilt sein können. Der Beschleuniger **C** für die Vorvernetzung bzw. die Vorpolymerisation befindet sich zweckmäßigerweise ebenfalls getrennt von dem Vernetzungsmittel **B,** wenn dessen Stabilität dadurch beeinträchtigt wird.

Bei dem funktionalisierten niedermolekularen Kautschuk **A** handelt es sich bevorzugt um (Co)Polymerisate von Monomeren ausgewählt aus zwei- oder mehrfach ungesättigten Kohlenwasserstoffen, wobei gegebenenfalls einfach olefinisch ungesättigte Monomere wie z. **B.** Styrol, Acrylester und Acrylnitril zusätzlich in der Monomerenmischung vorhanden sein können. Die Kautschuke **A** weisen längs der Hauptkette und/oder in Seitenketten olefinische Doppel-bindungen auf, die der üblichen Vulkanisation mit Schwefel zugänglich sind. Zusätzlich tragen diese funktionalisierten niedermolekularen Kautschuke **A** noch reaktive Gruppen an den Kettenenden (terminal) und/oder in Seitenketten (lateral), die mit dem Vernetzer **B** unter Bildung von Oligomeren oder teilvernetzten Systemen reagieren. Dabei sind die reaktiven Gruppen des Vernetzungsmittels **B** so beschaffen, daß sie mit den reaktiven Gruppen des Kautschuks **A** vorzugsweise unter Bildung von kovalenten Bindungen reagieren. Die funktionellen Gruppen des niedermolekularen Kautschuks **A** und die der Vernetzungsmittel **B** sind daher jeweils ausgewählt aus Hydroxylgruppen, Epoxidgruppen, Carbonsäureanhydridgruppen, Carboxyl-gruppen, Amingruppen und Isocyanatgruppen, und **A** und **B** werden derart kombiniert, daß ihre funktionellen Gruppen bei der Reaktion von **A** und **B** unter Bildung einer Urethanbindung-NR-CO-O-,einer Esterbindung-CO-O-, einer Harnstoffbindung-NR-CO-NR-, oder einer Säureamidbindung -CO-NR- reagieren. Der Rest R kann in diesen Formeln gleich oder unterschiedlich sein und Wasserstoff, lineare, verzweigte oder cyclische aliphatische Reste mit bevorzugt 1 bis 20 Kohlenstoffatomen oder aromatische Reste mit bevorzugt 5 bis 16 Kohlenstoffatomen bedeuten.

Bevorzugt sind dabei solche Mischungen, in denen der Kautschuk **A** hydroxyfunktionell ist und die Vernetzungsmittel **B** funktionelle Gruppen ausgewählt aus Isocyanatgruppen, Säureanhydridgruppen und Epoxidgruppen aufweisen.

Es ist vorteilhaft, daß die mittlere Funktionalität der Kautschuke **A** 1,5 bis 5,0 beträgt, und daß die mittlere Funktionalität der Vernetzungsmittel **B** 5,0 bis 1,9 beträgt. Insbesondere sind solche Kombinationen vorteilhaft, bei denen die mittlere Funktionalität von **A** 1,8 bis 2,3 und die der Vcrnetzungsmittel **B** 4 bis 2,0 beträgt. Unter "Funktionalität" wird hier und im folgenden die (mittlere) Anzahl der funktionellen Gruppen in einem (Polymer-)Molekül verstanden.

Die unmittelbar nach dem Mischen von **A** und **B** oder nach Erwärmung der auf das Substrat aufgetragenen Mischungen von **A** und **B** sowie den weiteren Zusatzstoffen einsetzende Reaktion bewirkt eine Erhöhung der Viskosität um einen Faktor von mindestens 3, bevorzugt auf mehr als das 10fache, bezogen auf die noch unreagierte Mischung. Dies läßt sich beispielsweise durch Herstellen der Mischung in einem Rotationsviskosimeter und Aufnehmen der Viskosität als Funktion der Zeit (und gegebenenfalls der Temperatur) zeigen.

Vorzugsweise sind die niedermolekularen Kautschuke **A** ausgewählt aus Polybutadien, Polyisopren, Polybutadiencopolymeren (z.B. Copolymere des 1,4-Butadiens mit Styrol oder Acrylnitril) oder Polyisoprencopolymere, die mit reaktiven Gruppen wie Hydroxylgruppen, Epoxidgruppen, Carbonsäureanhydridgruppen, Carboxylgruppen, Aminogruppen, Isocyanatgruppen oder einer Kombination aus diesen funktionalisiert sind. Im Mittel sind mehr als eine, vorzugsweise zwei oder mehr funktionelle Gruppen pro Molekül enthalten (im Falle der Amine und Carbonsäureanhydrid-Gruppen bezieht sich dies auf die -N-H bzw. -COOH- Gruppe, wobei ein primäres Amin also zwei reaktive -N-H-Gruppen, und eine Carbonsäureanhydrid-Gruppe zwei reaktive Säuregruppen ergibt).

Bei dem Polybutadien bzw. Polybutadiencopolymer kann es sich sowohl um lineare als auch um verzweigte Polymere handeln. Der Anteil an 1,4-trans-, 1,4-cis- und Vinylkonfiguration bei den Butadieneinheiten kann variieren und bietet eine zusätzliche Möglichkeit, die Viskosität des Polymeren und die Eigenschaften des (vulkanisierten) Endprodukts zu steuern. Bei dem Polyisopren bzw. Polyisoprencopolymer kann es sich sowohl um lineare als auch um verzweigte Polymere handeln. Der Anteil an 1,4-trans- oder 1,4-cis-Konfiguration bei den Isopreneinheiten kann variieren. Die bevorzugte zahlenmittlere molare Masse (Mₙ) liegt bei allen genannten Kautschuken zwischen 500 und 10.000 g/mol. Die eingesetzten funktionalisierten Polybutadiene, Polyisoprene, Butadiencopolymere bzw. Isoprencopolymere können auch hydriert oder teilhydriert sein.

Besonders bevorzugt sind Mischungen, in denen als Kautschuk **A** ein Homo- oder Copolymer des Butadien oder des Isopren mit funktionellen Gruppen ausgewählt aus Hydroxyl-Gruppen, Carbonsäureanhydrid-, und Epoxid-Gruppen eingesetzt wird.

In einer anderen bevorzugten Variante wird als Kautschuk **A** ein Kautschuk ausgewählt aus teilweise hydriertem Polybutadien, teilweise hydrierten Copolymeren des Butadiens, teilweise hydriertem Polyisopren, teilweise hydrierten Copolymeren des Isoprens, mit funktionellen Gruppen ausgewählt aus Hydroxyl-, Carbonsäureanhydrid-, und Epoxid-Gruppen eingesetzt.

Geeignet sind beispielsweise auch funktionalisierte niedermolekulare Butylkautschuke, Brombutylkautschuke, Chlorbutylkautschuke, Polyoctenamere oder EPDM-Kautschuke.

Alle diese Kautschuke werden alleine oder auch in Kombination miteinander verwendet, sofern die Kombination nicht zu einer unerwünschten Vorvernetzung führt.

Bei den Vernetzungsmitteln **B** für den funktionalisierten Kautschuk handelt es sich um Verbindungen, die mit
- Hydroxyl-Gruppen (**B1**) oder
- Epoxid-Gruppen (**B2**) oder
- Carbonsäureanhydrid-Gruppen (**B3**) oder
- Carboxyl-Gruppen (**B4**) oder
- Amin-Gruppen (**B5**) oder
- Isocyanat-Gruppen (**B6**)
oder einer Kombination aus diesen (soweit die verschiedenen reaktiven Gruppen nicht bereits untereinander reagieren) funktionalisiert sind. Im Mittel sind mehr als eine, vorzugsweise zwei oder mehr funktionelle Gruppen pro Molekül enthalten (im Falle der Amine und Carbonsäureanhydrid-Gruppen bezieht sich dies wie oben erläutert auf die -N-H bzw.-COOH-Gruppe). Bei dem Vernetzungsmittel kann es sich auch um polymere oder oligomere Verbindungen handeln. Entscheidend ist, daß das Vernetzungsmittel mit den funktionellen Gruppen des niedermolekularen Kautschuks eine Reaktion eingehen kann, die entweder zur Ausbildung eines dreidimensionalen Netzwerks oder zum Aufbau eines Polymers mit einer gegenüber der Mischung der Edukte **(A** und **B)** deutlich erhöhten Viskosität führt.

Bei dem Vernetzungsmittel **B** kann es sich auch um ein Gemisch aus verschiedenen geeigneten Verbindungen handeln. Polymere Vernetzungsmittel **B** könnten beispielsweise aus den oben beschriebenen funktionalisierten Kautschuken ausgewählt werden, die mit funktionalisierten Kautschuken **A** eine Reaktion eingehen können, wobei die funktionellen Gruppen von **B** und **A** so gewählt werden müssen, daß die beiden Spezies miteinander reagieren können (z.B. funktionelle Gruppen von **A** sind Epoxid-Gruppen, und die funktionellen Gruppen von **B** sind Aminogruppen; oder ein hydroxylfunktionalisiertes Polybutadien als niedermolekularer Kautschuk **A** und ein maleiniertes Polybutadien als Vernetzungsmittel **B** oder umgekehrt).

Geeignete Hydroxylgruppen-haltige Vernetzungsmittel **B1** sind sämtliche Alkohole, die mehr als eine Hydroxyl-Gruppe pro Molekül enthalten. Sie können sowohl gesättigt als auch ungesättigt, sowie aliphatisch, cycloaliphatisch, polycyclisch, aromatisch oder heterocyclisch sein und auch zusätzlich andere funktionelle Gruppen wie beispielsweise Amino-Gruppen aufweisen. Zu diesen Verbindungen gehören auch Polymere, die terminal oder lateral Hydroxyl-Gruppen enthalten, wie beispielsweise Polyglykoläther, Polyester, Copolymere hydroxyl-funktionalisierter Methacrylate oder Acrylate, Copolymere hydroxyl-funktionalisierter Olefine, hydroxyl-funktionalisierte Kautschuke oder hydroxyl-funktionalisierte Polyolefine. Die Polymere können eine lineare, verzweigte, hyperverzweigte oder dendritische Struktur aufweisen.

Beispiele für mehrwertige Alkohole sind 1,2-Dihydroxyäthan, 1,2-Dihydroxypropan, 1,3-Dihydroxypropan, 1,4-Dihydroxybutan, 1,5-Dihydroxypentan, Neopentylglykol, 1,6-Dihydroxyhexan, 4,8-Bis-(hydroxymethyl)-tricyclo[5.2.1.0^{2,6}]decan, 1,4-Dihydroxycyclohexan, Diäthylenglykol, Dipropylenglykol, höhere Polyoxyalkylenglykole, Glycerin, Trimethylolpropan, Trimethyloläthan, Pentaerythrit, Sorbit, oxalkylierte Polyole (wie oxalkyliertes Trimethylolpropan, oxalkyliertes Pentaerythrit u.a., die durch Umsetzung von Polyolen mit 1,2-Epoxyalkanen in bekannter Weise erhältlich sind), Cyclohexandimethanol, Bis-(4-hydroxycyclohexyl)-methan, Bis-(4-hydroxycyclohexyl)-propan, N-Methyldiäthanolamin, N-Butyldiäthanolamin, N,N-(Dihydroxyäthyl)anilin, N,N-Bis-(hydroxyäthyl)-toluidin, 1,4-Bis-(hydroxyäthyl)piperazin, Triäthanolamin oder Triisopropanolamin. Die Alkohole können sowohl in reiner Form als auch in Form von Mischungen eingesetzt werden.

Als Epoxid-funktionelle Vernetzungsmittel **B2** können sämtliche Epoxidharze verwendet werden, die mehr als eine Epoxid-Gruppe pro Molekül enthalten. Sie können sowohl gesättigt als auch ungesättigt, sowie aliphatisch, cycloaliphatisch, aromatisch oder heterocyclisch sein und auch andere funktionelle Gruppen wie beispielsweise Hydroxyl-Gruppen aufweisen. Geeignete Epoxidharze sind z.B. solche, die aus Diphenylolalkanen oder höheren Polyphenylolalkanen wie Novolaken und Epichlorhydrin bzw. Dihalogenhydrinen, vorzugsweise Epichlorhydrin, durch die sogenannte Taffy-Reaktion erhalten werden. Besonders bevorzugt sind die bekannten Epoxidharze auf Basis von Bisphenol A oder Bisphenol F, insbesondere Flüssigharze, oder deren Mischungen. Außerdem können solche Epoxidharze verwendet werden, die durch Reaktion von Epihalogenhydrinen mit mehrwertigen Alkoholen oder Polyätherglykolen (z. B. Epoxidharze abgeleitet von Polypropylenglykolen) oder durch Epoxidierung von Doppelbindungs-haltigen Verbindungen, z.B. durch Epoxidierung von ungesättigten fetten Ölen oder ungesättigten Kohlenwasserstoffen wie Dicyclopentadien, Butadien, Polybutadien usw. hergestellt werden. Weiterhin kommen Poly-(N-glycidyl)-Verbindungen in Frage, die erhältlich sind durch Dehydrohalogenierung der Reaktionsprodukte von Epichlorhydrin und aliphatischen, araliphatischen oder aromatischen ein- oder mehrfunktionellen primären Aminen. Zu den Poly-(N-glycidyl)-Verbindungen gehören aber auch solche, die von der Isocyanursäure, von cyclischen Harnstoffen oder von Aminoplastbildnern wie Melamin oder Guanaminen abgeleitet sind. Außerdem können auch Polyglycidylester von Polycarbonsäuren eingesetzt werden, die man durch die Umsetzung von Epichlorhydrin oder ähnlichen Epoxidverbindungen mit aliphatischen, cycloaliphatischen oder aromatischen Polycarbonsäuren erhält. Weitere geeignete Verbindungen sind Glycidylestergruppen-haltige Copolymerisate, die durch Copolymerisation von z.B. Glycidylmethacrylat mit anderen Meth- oder Acrylsäureestern oder durch Copolymerisation mit Styrol erhalten werden. Geeignet sind auch Addukte eines Epoxyharzes mit einem Amin bzw. aminofunktionalisierten Oligomer oder Polymer. Die Epoxide können sowohl in reiner Form als auch in Form von Mischungen eingesetzt werden.

Geeignete Carbonsäureanhydrid-funktionelle Vernetzungsmittel **B3** sind sämtliche Carbonsäureanhydride, die sich von zwei- oder mehrbasigen Carbonsäuren ableiten. Sie können sowohl gesättigt als auch ungesättigt, sowie aliphatisch, cycloaliphatisch, aromatisch oder heterocyclisch sein und auch zusätzlich andere funktionelle Gruppen aufweisen. Zu diesen Verbindungen gehören auch Polymere, die terminale oder laterale Carbonsäureanhydrid-Gruppen enthalten, wie beispielsweise maleinierte Kautschuke, maleinierte Öle oder Fette oder maleinierte Polyolefine. Die Polymere können eine lineare, verzweigte, hyperverzweigte (mit Verzweigungen an Seitenzweigen) oder dendritische Struktur aufweisen. Beispiele für einsetzbare Carbonsäureanhydride sind Hexahydrophthalsäureanhydrid, Phthalsäureanhydrid, Trimellithsäureanhydrid, Dodecenylbernsteinsäureanhydrid, Methylnorbonendicarbonsäureanhydrid, Anhydride anderer unter **B4** aufgeführter Carbonsäuren oder maleiniertes Polybutadien bzw. maleinierte Polybutadiencopolymere. Die Carbonsäureanhydride können sowohl in reiner Form als auch in Form von Mischungen eingesetzt werden.

Als carboxyl-funktionelle Vernetzungsmittel B4 können sämtliche Carbonsäuren verwendet werden, die mehr als eine Carboxyl-Gruppe pro Molekül enthalten. Sie können sowohl gesättigt als auch ungesättigt, sowie aliphatisch, cycloaliphatisch, aromatisch oder heterocyclisch sein und auch andere funktionelle Gruppen wie beispielsweise Hydroxylgruppen aufweisen. Zu diesen Verbindungen gehören auch Polymere, die terminale oder laterale Carboxyl-Gruppen enthalten, wie beispielsweise Polyester, Polyamide, Polymere oder Copolymere der Acrylsäure, Polymere oder Copolymere der Methacrylsäure, carboxyl-funktionalisierte Kautschuke oder carboxyl-funktionalisierte Polyolefine. Die Polymere können eine lineare, verzweigte, hyperverzweigte oder dendritische Struktur aufweisen.

Eingesetzt werden können z.B. Alkandisäuren wie Malonsäure, Bernsteinsäure, Glutarsäure, Adipinsäure, Pimelinsäure, Korksäure, Azelainsäure oder Sebacinsäure, Phthalsäure, Terephthalsäure, Isophthalsäure, Cyclohexandicarbonsäure, Tetrahydrophthalsäure, Maleinsäure, Weinsäure, Trimesinsäure oder Trimellithsäure. Die Carbonsäuren können sowohl in reiner Form als auch in Form von Mischungen eingesetzt werden.

Geeignete Amino-funktionelle Vernetzungsmittel **B5** sind sämtliche Amine, die mehr als eine N-H-Funktionalität pro Molekül enthalten. Sie können sowohl gesättigt als auch ungesättigt, sowie aliphatisch, cycloaliphatisch, aromatisch oder heterocyclisch sein und auch andere funktionelle Gruppen wie beispielsweise Hydroxylgruppen aufweisen. Zu diesen Verbindungen gehören auch Polymere, die terminale oder laterale Amino-Gruppen enthalten, wie beispielsweise Polyamide, Polyamidoamine, Polyalkylenamine oder Copolymere aminofunktionalisierter Acrylate oder Methacrylate. Die Polymere können eine lineare, verzweigte, hyperverzweigte oder dendritische Struktur aufweisen.

Beispiele für einsetzbare Amine sind Methylamin, Äthylamin, Propylamin, Butylamin, Hexylamin, Octylamin, Tridecylamin, Isopropylamin, sec.-Butylamin, tert.-Butylamin, 2-Äthylhexylamin, Trimethylhexamethylendiamin, Cyclopentylamin, Cyclohexylamin, 2-Phenyläthylamin, 1-Phenyläthylamin, Benzylamin, m-Xylylendiamin, Anilin, Toluidin, Xylidin, Äthoxyäthylamin, Äthoxypropylamin, Methoxyäthylamin, 3-(2-Äthyläthoxy)-propylamin, (Methoxyäthoxy)propylamin, Äthylendiamin, 1,3-Propandiamin, 1,4-Diaminobutan, Hexamethylendiamin, 1,2-Propandiamin, Neopentandiamin, Methylpropandiamin, Diaminodicyclohexylmethan, Dimethyldiaminodicyclohexylamin, Diaminodiphenylmethan, Isophorondiamin, 3-(Cyclohexylamino)propylamin, Piperazin, 1-Diäthylamino-4-aminopentan, 2-(Diäthylamino)-4-aminopentan, 3-(Diäthanolamino)propylamin, 3-(Dimethylamino)propylamin, N-(2-Aminoäthyl)morpholin, 1,12-Diamino-4,9-dioxadodecan, 1,13-Diamino-4,7,10-trioxatridecan, Polyätheramine abgeleitet von Polyäthylen- oder Polypropylenglykol sowie deren Mischpolymeren, Diäthylentriamin, Dipropylentriamin, N-(2-Aminoäthyl)piperazin, N-(3-Aminopropyl)-N-methylpropandiamin, N,N-Dimethyldipropylentriamin. Weiterhin verwendbar sind z.B. mehrkernige Amine, die sich von Diaminodicyclohexylmethan oder Diaminodiphenylmethan ableiten, Polyamidoamine auf der Basis von Diäthylentriamin oder ähnlichen Aminen und Fettsäuren, Amin-Epoxidharz-Addukte oder Polyamid-Epoxidharz-Addukte. Beispiele für geeignete Amine mit Hydroxyl-Gruppen sind 2-Aminoäthanol, 2-Aminopropanol, Aminopentanol, Isopropanolamin, (Aminoäthoxy)äthanol, (Aminoäthyl)äthanolamin, N-Äthyläthanolamin, N-Butyl-äthanolamin, N-(2-Hydroxyäthyl)anilin, 1-(2-Hydroxyäthyl)piperazin, N-(2-Hydroxyäthyl)propan-1,3-diamin, Diäthanolamin, Diisopropanolamin, und 3-(2-Hydroxyäthylamino)-1-propanol. Die Amine können sowohl in reiner Form als auch in Form von Mischungen eingesetzt werden.

Als Isocyanat-funktionelle Vernetzungsmittel **B6** eignen sich sämtliche aliphatischen, aromatischen, cycloaliphatischen oder gemischt aromatisch-aliphatischen Isocyanate mit mehr als einer Isocyanat-Gruppe pro Molekül. Eingesetzt werden können beispielsweise m-Phenylendiisocyanat, 2,4-Toluylendiisocyanat, 2,6-Toluylendiisocyanat, Mischungen aus 2,4-und 2,6-Toluylendiisocyanat (TDI), Hexamethylendiisocyanat (HDI), Tetramethylendiisocyanat, Trimethylhexamethylendiisocyanat, Cyclohexan-1,4-diisocyanat,Isophorondiisocyanat, Dicyclohexylmethandiisocyanat (H₁₂-MDI), Tetramethylxylylendiisocyanat (TMXDI), Naphthalin-1,5-diisocyanat oder 4,4'-Diphenylmethandiisocyanat (MDI). Weiterhin lassen sich auch alle Isocyanurate, Polyisocyanurate, Polyisocyanate, Präpolymere, Biurete, Uretdione und Addukte verwenden, die Isocyanatgruppen enthalten bzw. auf Basis von Isocyanaten wie den oben genannten hergestellt wurden. Die Isocyanate können sowohl in reiner Form als auch in Form von Mischungen eingesetzt werden.

Die Vorvernetzungsreaktion kann durch geeignete Beschleuniger bzw. Katalysatoren **C** beschleunigt werden. Die Auswahl der eingesetzten Beschleuniger bzw. Katalysatoren richtet sich nach der Art der Vorvernetzungsreaktion.

Geeignete Beschleuniger für die Vorvernetzung über Epoxidgruppen sind sämtliche Beschleuniger, die bei der Umsetzung von Epoxiden Anwendung finden oder eine Mischung aus diesen. Dazu gehören bevorzugt tert. Amine und Imidazole wie z.B. Dimethylbenzylamin, Dimethylcyclohexylamin, Monoäthanoldimethylamin, Triäthanolamin, Trimethylaminoäthylamin, Tetramethyläthylendiamin, Mannich-Basen (beispielsweise aus Phenol, Dimethylamin und Formaldehyd), 1-Methylimidazol, 2-Methylimidazol, 2-Äthyl-4-methylimidazol, 2-Phenylimidazol oder N-Alkylpiperidine. Verwendbar sind aber auch Wasserstoffdonatoren wie z.B. Salicylsäure oder Benzylalkohol.

Geeignete Katalysatoren für die Additionsreaktion der Isocyanate sind sämtliche Katalysatoren, die bei der Darstellung von Polyurethanen Anwendung finden oder eine Mischung aus diesen. Dazu gehören tertiäre aliphatische, cycloaliphatische oder gemischt aromatisch-aliphatische Amine und organometallische Verbindungen wie z.B. Triäthylendiamin, N-Methylmorpholin, N-Äthylmorpholin, Diäthyläthanolamin, 1-Methyl-4-dimethylaminoäthylpiperazin, Bis-(N,N-dimethylaminoäthyl)äther, 3-Methoxypropyldimethylamin, N,N,N'-Trimethyl-N'-isopropylpropylendiamin, 3-Diäthylaminopropyldiäthylamin, Dimethylbenzylamin, sowie organische Verbindungen des Blei, des Eisen, des Quecksilber, des Titan, des Wismut und des Zinn.

Geeignete Beschleuniger für die Vorvernetzung über Carbonsäureanhydridgruppen sind sämtliche Beschleuniger, die bei der Umsetzung von Carbonsäureanhydriden Anwendung finden oder eine Mischung aus diesen. Dazu gehören tertiäre Amine und Imidazole, wie sie auch für die Umsetzung der Isocyanat- und der Epoxid-Gruppen eingesetzt werden, sekundäre Amine wie Dimethylamin, Diäthylamin oder n-Dibutylamin, sowie organische Säuren wie z.B. p-Toluolsulfonsäure oder Alkylbenzolsulfonsäure.

Bei den Reaktivverdünnern **D** handelt es sich vorzugsweise um niederviskose (d.h. mit dynamischen Viskositäten von 2 Pa·s oder darunter) Verbindungen, die spätestens bei der Vulkanisation in nicht migrationsfähige, bevorzugt polymere Strukturen, eingebunden werden. Es ist aber auch möglich, daß die Verbindungen bereits vor der Vulkanisation ganz oder teilweise mit dem Vernetzungsmittel **B** oder dem flüssigen Kautschuk **A** reagieren.

Bei diesen Reaktivverdünnern kann es sich auch um bei Zimmertemperatur kristalline Substanzen handeln, die sich in der Gesamtmischung lösen und dadurch eine Viskositätsabsenkung bewirken. Eine wichtige Gruppe an verwendbaren Verbindungen bilden dabei die olefinisch ungesättigten Verbindungen, die eine oder mehrere Doppelbindungen enthalten wie z. B. Styrol und dessen Derivate (z.B. Vinyltoluol, Divinylbenzol), ungesättigte (cyclische) Aliphaten (z. B. Cyclododecatrien, Terpene, Dicyclopentadien), niedermolekulare Kautschuke (z.B. niedermolekulare Polybutadiene oder Polybutadiencopolymere oder Polyisoprene oder Polyisoprencopolymere bevorzugt mit einer zahlenmittleren molaren Masse Mₙ zwischen 500 und 3000 g/mol), niedermolekulare Acrylate oder Methacrylate (z.B. Trimethylolpropantrimethacrylat, Diurethandimethacrylate, Butandioldimethacrylat, Hexandioldimethacrylat, Dodecandioldimethacrylat, Glycerindi- und trimethacrylat, Äthylenglykoldimethacrylat, Diäthylenglykoldimethacrylat, Triäthylenglykoldimethacrylat, Tetraäthylenglykoldimethacrylat, n-Butylmethacrylat, i-Butylmethacrylat, n-Hexylmethacrylat, Cyclohexylmethacrylat, 2-Äthylhexylmethacrylat, Isobornylmethacrylat, Benzylmethacrylat, Tetrahydrofurfurylmethacrylat, Methacrylsäureester von längerkettigen aliphatischen Alkoholen mit 7 bis 40 Kohlenstoffatomen, hydroxylfunktionalisierte Methacrylate, aminfunktionalisierte Methacrylate, sowie die entsprechenden strukturgleichen Acrylate), Allylester (z.B. Diallyldiglykolcarbonat, Diallylphthalat, Diallylisophthalat, Triallylcyanurat) oder Allyläther von ein- oder mehrwertigen aliphatischen Alkoholen mit 2 bis 40 Kohlenstoffatomen.

Einsetzbar sind auch niederviskose Epoxyharze, wie beispielsweise Butandioldiglycidyläther, Hexandioldiglycidyläther, 2,4-Epoxycyclohexancarbonsäure-3',4'-epoxycyclohexylmethylester, Bis-(3,4-epoxy-cyclohexylmethyl)-adipat), N,N-Diglycidylanilin, p-tert.-Butylphenolglycidyläther oder längerkettige aliphatische Glycidyläther. Weiterhin können auch mehrwertige Alkohole oder Amine als Reaktivverdünner eingesetzt werden wie sie z.B. auch als Vernetzungsmittel **B1** bzw. **B5** aufgeführt sind.

Die verschiedenen Verbindungen können sowohl einzeln als auch im Gemisch miteinander als Reaktivverdünner eingesetzt werden. Die genaue Menge und Zusammensetzung des Reaktivverdünners richtet sich nach der gewünschten Mischungsviskosität, den erforderlichen Eigenschaften des Vulkanisats und den funktionellen Gruppen der niederviskosen Kautschuke **A** bzw. der Vernetzungsmittel **B**. Große Mengen an Reaktivverdünnern führen zu einer sehr niedrigen Viskosität, können aber die mechanischen Eigenschaften des Vulkanisats deutlich verschlechtern. Andererseits kann die Zugabe der richtigen Mengen an Reaktivverdünner neben einer Viskositätserniedrigung auch zu einer Verbesserung der chemischen und mechanischen Eigenschaften führen. Die eingesetzten Mengen hängen von dem jeweils gewählten System aus Kautschuk und Reaktivverdünner ab.

Bei den Vulkanisationschemikalien **E** handelt es sich im Fall von Kautschuken, die über olefinische Doppelbindungen vernetzt werden, um Schwefel und/oder einen oder mehrere Vulkanisationsbeschleuniger bzw. Aktivatoren, wie sie auch bei der Herstellung und Vulkanisation herkömmlicher Gummibahnen eingesetzt werden. Beispiele sind Thiazolsulfenamide, Thiurame, Dithiocarbamate, Guanidine, Metalloxide (bevorzugt Zinkoxid), Stearinsäure oder Zinkstearat. Möglich ist aber auch der Einsatz von Phenolharzen.

Werden doppelbindungsfreie Kautschuke, wie Silikonkautschuk, EPM-Kautschuk, Acrylkautschuk, CSM (chlorsulfoniertes Polyäthylen) eingesetzt, so benutzt man Peroxide oder Metalloxide wie MgO oder ZnO als Vulkanisationsmittel.

Als Füllstoffe **F** eignen sich generell alle Substanzen, die für diesen Zweck auch bei herkömmlichen Gummimischungen verwendet werden und alle Mischungen aus diesen. Dies sind vor allem Ruße, Kohlenstaub, Graphit, Hartgummistaub, Kieselsäuren (mit und ohne Oberflächen-Modifikation), Polymerpulver (z.B. PE, PP, PVC, PS, PTFE, Festkautschukpulver bzw. -dispersionen) oder Bariumsulfat. Es sind aber auch Füllstoffe und Pigmente einsetzbar, die üblicherweise im Bereich der Beschichtungen Verwendung finden, wie beispielsweise Schichtsilikate, Glasflakes, organische und anorganische Fasern, oder auch Festharze wie z.B. Cyclokautschuk.

Besonders geeignet sind solche mineralischen Füllstoffe oder Pigmente, die der Zusammensetzung Sperrschichteigenschaften verleihen. Dies sind insbesondere plättchenförmige (oblate) mineralische Füllstoffe und Pigmente, wie beispielsweise Schichtsilikate (Talk, Glimmer, Pyrophyllit), Graphit, Glasflakes, Eisenglimmer (Hämatit) und Phthalocyaninpigmente. Werden solche Pigmente in die erfindungsgemäßen Zusammensetzungen eingebracht, so wird die Diffusion senkrecht zu den aus diesen Füllstoffen gebildeten Schichten erschwert. Derart modifizierte Zusammensetzungen zeigen bei gleichem Massenanteil an Füllstoff bessere Chemikalienbeständigkeit als solche mit Füllstoffen, deren Gestalt eher sphärisch (kugelförmig) oder prolat (zigarrenförmig) ist.

Des weiteren können Hilfsstoffe G zugesetzt werden, deren Zusammensetzung sich nach den anderen Bestandteilen richtet. Zu den Hilfsstoffen zählen z.B. Antioxidationsmittel, Stabilisatoren (beispielsweise für PVC-Füllstoffe oder Reaktivverdünner), Entlüfter oder Haftvermittler.

Die Vermischung der einzelnen Bestandteile einer Komponente kann über ein Mischaggregat wie z.B. einen Dissolver erfolgen.

Zweckmäßig werden die beiden Komponenten des Zwei-Komponenten-Systems erst kurz vor bzw. während der Applikation zusammengegeben und miteinander vermischt. Die Topfzeit hängt dabei wesentlich von den zugesetzten Beschleunigern ab. Das Vermischen während der Applikation kann bevorzugt durch gleichzeitiges Spritzen der beiden Komponenten über getrennte Düsen bzw. Mischdüsen erfolgen. Bei dieser Art der Applikation ergibt sich kein Problem durch geringe Topfzeiten.

Durch Auftragen der beschriebenen Mischungen auf Substrate und anschließendes Vorvernetzen (Viskositätsanstieg) und schließlich Vulkanisieren lassen sich die Substrate in einfacher Weise auch bei komplizierten Geometrien beschichten und gegen korrosive Einwirkungen schützen.

Insbesondere vorteilhaft ist ein Verfahren zum Beschichten von Substraten, bei dem die beschriebenen Mischungen auf die Oberfläche der Substrate aufgetragen werden und im ersten Schritt durch Reaktion der Komponente **A** mit der Komponente **B** die Viskosität des Beschichtungsmittels durch geeignete Wahl von Art und Menge der Komponenten in der Mischung und Wahl der Temperatur innerhalb kurzer Zeit, maximal von 30 Minuten auf mindestens den dreifachen Wert gesteigert wird, und anschließend die viskose Beschichtung durch Erwärmen auf eine Temperatur von 120 °C bis 160 °C vulkanisiert wird. Werden auf diese Weise beispielsweise Kessel oder Tanks von innen beschichtet, so fließt die aufgetragene Schicht nicht von den senkrechten Flächen und auch nicht von überhängenden Flächen ab.

Als besonders günstig hat sich ein Verfahren erwiesen, bei dem das Beschichtungsmittel mit einer Zweistoffdüse aufgetragen wird, wobei eine der Komponenten frei von Mengen des Kautschuks **A** und die andere der Komponenten frei von Mengen des Vernetzungsmittels **B** ist. Ein Auftrag durch Streichen, Rollen, Gießen, Tauchen oder Spachteln ist jedoch ebenfalls möglich.

Nach der Vorvernetzung bzw. Vorpolymerisation ist die Gummierung bei geeigneter Einstellung (d.h. Kautschuk-Massenanteil bevorzugt über ca. 50 %, je nach Art und Menge eines gegebenenfalls eingesetzten Reaktivverdünners) begrenzt mechanisch belastbar bzw. sogar begehbar. Dies vereinfacht z.B. den Auftrag einer weiteren Schicht. Je nach Kombination der Komponenten **A** und **B**, Art und Menge der weiteren Zusätze und gewählter Temperatur für die Vorvernetzung und der Naßfilm-Schichtdicke ergibt sich die benötigte Zeit: bei geeigneter Wahl der Stoffe bzw. Stoffgemische **A** und **B** und Verwendung von Katalysatoren oder Beschleunigern für die Reaktion der beiden Stoff(gemisch)e zeigt sich bei einer Naßfilm-Schichtdicke von ca. 750 µm oder darüber und einer Temperatur von bis zu 60 °C bereits nach wenigen Minuten kein Abfließen an senkrechten Wänden mehr.

Die Vulkanisation der Gummierungen kann sowohl bei Normaldruck als auch bei Überdruck durchgeführt werden. Überdruck empfiehlt sich für völlig porenfreie Überzüge. Ideale Vulkanisationstemperaturen liegen zwischen 120 und 160 °C. Eine abgeschlossene Vorvernetzung ist dabei nicht zwingend Voraussetzung, um ein Abfließen von schrägen Flächen während des Vulkanisationsvorgangs zu vermeiden. Ein nicht zu schnelles Erwärmen auf die Vulkanisationstemperatur reicht meist aus, da die entsprechenden Reaktionen, die zu der Viskositätserhöhung bzw. Vernetzung führen, durch den Temperaturanstieg ebenfalls beschleunigt werden.

Ein weiterer Gegenstand der Erfindung ist die Verwendung der oben genannten Formulierungen für den Korrosionsschutz, vorwiegend dem korrosionsbeständigen Auskleiden eines aus Metall, insbesondere Stahl, bestehenden Bauteils wie Behälter, Rohrleitung oder dergleichen, bei dem die Hartgummibeschichtung auf die nutzungsseitige Oberfläche des Bauteils aufgebracht wird. Dabei kann es sich um Komponenten in Müllverbrennungsanlagen, Abwasseraufbereitungsanlagen, Prozeß-, Versorgungs- und Lagerbehälter in der chemischen Industrie sowie um diverse Stahlbauteile in verschiedenen Industriezweigen handeln.

Die folgenden Beispiele verdeutlichen die Erfindung:

### Beispiel 1

150 g eines hydroxylterminierten niedermolekularen Polybutadiens (® Poly bd R 45 HT der Fa. Elf-Atochem) wurden mit 75 g Divinylbenzol, 66 g Flammruß, 75 g Schwefel, 4,5 g Thiazolsulfenamid, 1 g Tetramethylthiuramdisulfid, 1 g eines Zeolith-Pulvers (® Baylith-T, Bayer AG), 5 g pulverförmigem Polytetrafluoräthylen und 0,8 g ® Desmorapid PP (tertiäres Amin, Bayer AG) über einen Dissolver in 30 Minuten zu einer homogenen Mischung verrührt.

80 g dieser Mischung wurden mit 3,53 g eines polyfunktionellen Isocyanats (® Desmodur VL, Monomer/Oligomeren-Mischung von Bis(4-isocyanatophenyl)methan, Bayer AG) verrührt und das resultierende Gemisch in Formen gegossen, aus denen Probekörper für die Durchführung der notwendigen Prüfungen gewonnen wurden.

Bei einer Schichtdicke in der Form von ca. 1000 µm und bei Raumtemperatur (23 °C) zeigt sich kein Abfließen mehr nach 5 Minuten, wenn die Form senkrecht gestellt wird.

Die anschließende Vulkanisation erfolgte in 4,5 Stunden bei 150 °C und Normaldruck.

Das auf diesem Weg gewonnene Hartgummi weist folgende Eigenschaften auf:
- Zugfestigkeit: 36 MPa ( = N/mm²)
- Reißdehnung: 4,6 %
- Glasübergangstemperatur: 40 °C
- Härte (Shore D): 75

### Beispiel 2

85 g eines hydroxylterminierten niedermolekularen Polybutadiens (® Poly bd R 45 HT der Fa. Elf-Atochem) wurden mit 60 g eines niedermolekularen Polybutadiens (Mₙ = ca. 800 g/mol), 20 g Flammruß, 80 g Quarzpulver, 70 g Schwefel, 4,5 g Thiazolsulfenamid, 1 g Tetramethylthiuramdisulfid und 0,4 g ® Desmorapid PP (tertiäres Amin, Bayer AG) über einen Dissolver in 30 Minuten zu einer homogenen Mischung verrührt.

80 g dieser Mischung wurden mit einer Mischung aus 9 g eines polyfunktionellen Isocyanats (® Desmodur VL, Monomer/Oligomeren-Mischung von Bis(4-isocyanatophenyl)methan, Bayer AG), 35 g eines maleinierten niedermolekularen Polybutadiens (® Polyvest OC 800 S, Degussa-Hüls), 20 g eines niedermolekularen Polybutadiens (Mₙ = ca. 800 g/mol) und 1 g eines Zeolith-Pulvers (® Baylith-T, Bayer AG) verrührt und das resultierende Gemisch in Formen gegossen, aus denen Probekörper für die Durchführung der notwendigen Prüfungen gewonnen wurden.

Bei einer Schichtdicke in der Form von ca. 1000 µm und bei Raumtemperatur (23 °C) zeigt sich kein Abfließen mehr nach 5 Minuten, wenn die Form senkrecht gestellt wird.

Die anschließende Vulkanisation erfolgte in 4,5 Stunden bei 140 °C und 4·10⁵ Pa (0,4 MPa, 4 bar) Druck.

Das auf diesem Weg gewonnene Hartgummi weist folgende Eigenschaften auf:
- Zugfestigkeit: 32 MPa ( = N/mm²)
- Reißdehnung: 1,5 %
- Glasübergangstemperatur: 53 °C
- Härte (Shore D): 79

## Patentansprüche

1. Verfahren zum Beschichten von Substraten, umfassend die Schritte:
a) Mischen von Massenanteilen der folgenden Bestandteile:
10 bis 90 % mindestens eines funktionalisierten niedermolekularen Kautschuks **A,** wobei die funktionellen Gruppen von **A** ausgewählt sind aus Hydroxylgruppen, Carbonsäureanhydridgruppen, Carboxylgruppen, Aminogruppen und Isocyanatgruppen,
1 bis 50 % mindestens eines Vernetzungsmittels **B** mit gegenüber den funktionellen Gruppen des Kautschuks **A** reaktiven Gruppen, wobei die funktionellen Gruppen von **B** ausgewählt sind aus Hydroxylgruppen, Carbonsäureanhydridgruppen, Carboxylgruppen, Aminogruppen und Isocyanatgruppen, mit der Maßgabe, daß die funktionellen Gruppen der Komponenten **A** und der Komponente **B** so gewählt werden, daß durch die Reaktion zwischen diesen eine Bindung gebildet wird ausgewählt aus Urethangruppen, Estergruppen, Harnstoffgruppen und Säureamidgruppen,
0,01 bis 10 % Beschleuniger/Katalysatoren **C** für die Vernetzungsreaktion zwischen **A** und **B,**
0 bis 60 % Reaktivverdünner **D,**
1 bis 50 % Vulkanisationschemikalien **E,**
5 bis 50 % Füllstoffe **F** und Hilfsstoffe **G,**
wobei die Summe der Massenanteile in der Mischung stets 100 % ergeben muß, und wobei mindestens eine der mittleren Funktionalitäten der Bestandteile **A** bzw. **B** mindestens 2 ist,
b) Auftragen der im Schritt a) hergestellten Mischung auf ein Substrat, wobei infolge der Reaktion der Komponente **A** mit der Komponente **B** die Viskosität der Mischung innerhalb von 30 Minuten auf mindestens das dreifache ansteigt, und
c) Vulkanisieren der Beschichtung auf dem Substrat durch Erhitzen.

2. Verfahren nach Anspruch 1, **dadurch gekennzeichnet, daß** die mittlere Funktionalität von **A** 1,5 bis 5,0 beträgt, und daß die mittlere Funktionalität der Vernetzungsmittel **B** 5,0 bis 1,9 beträgt.

3. Verfahren nach Anspruch 1, **dadurch gekennzeichnet, daß** der Kautschuk **A** hydroxyfunktionell ist und die Vernetzungsmittel **B** funktionelle Gruppen ausgewählt aus Isocyanat-Gruppen und Säureanhydrid-Gruppen aufweisen.

4. Verfahren nach Anspruch 1, **dadurch gekennzeichnet, daß** als Kautschuk **A** ein Homooder Copolymer des Butadien oder des Isopren mit funktionellen Gruppen ausgewählt aus Hydroxylgruppen und Säureanhydridgruppen eingesetzt wird.

5. Verfahren nach Anspruch 4, **dadurch gekennzeichnet, daß** das Homo- oder Copolymer eine zahlenmittlere molare Masse Mₙ von 500 bis 10 000 g/mol aufweist.

6. Verfahren nach Anspruch 1, **dadurch gekennzeichnet, daß** als Kautschuk **A** ein Kautschuk ausgewählt aus teilweise hydriertem Polybutadien, teilweise hydrierten Copolymeren des Butadiens, teilweise hydriertem Polyisopren, teilweise hydrierten Copolymeren des Isoprens, mit funktionellen Gruppen ausgewählt aus Hydroxyl- und Säureanhydrid-Gruppen eingesetzt wird.

7. Verfahren nach Anspruch 1, **dadurch gekennzeichnet, daß** plättchenförmige Füllstoffe oder Pigmente **F** eingesetzt werden.

8. Beschichtungen herstellbar durch das Verfahren des Anspruchs 1.

## Claims

1. Method for coating substrates, comprising the steps:
a) mixing proportions by weight of the following constituents:
| | |
|---|---|
| 10 to 90% | of at least one functionalized low-molecular rubber A, with the functional groups of A being selected from hydroxyl groups, carboxylic-acid anhydride groups, carboxyl groups, amino groups and isocyanate groups, |
| 1 to 50% | of at least one cross-linking agent B having groups that are reactive with respect to the functional groups of the rubber A, with the functional groups of B being selected from hydroxyl groups, carboxylic-acid anhydride groups, carboxyl groups, amino groups and isocyanate groups, with the proviso that the functional groups of the components A and the component B are chosen so that as a result of the reaction between them a bond is formed selected from urethane groups, ester groups, urea groups and acid amide groups, |
| 0.01 to 10% | accelerators/catalysts C for the crosslinking reaction between A and B, |
| 0 to 60% | reactive diluents D, |
| 1 to 50% | vulcanization chemicals E, |
| 5 to 50% | fillers F and auxiliary substances G, |
in which the sum of the proportions by weight in the mixture must always come to 100%, and in which at least one of the average functionalities of the constituents A or B is at least 2;
b) applying the mixture produced in Step a) to a substrate, with the viscosity of the mixture increasing within 30 minutes to at least three times the value as a result of the reaction of the component A with the component B; and
c) vulcanizing the coating on the substrate by heating.

2. Method according to claim 1, **characterised in that** the average functionality of A amounts to 1.5 to 5.0, and **in that** the average functionality of the cross-linking agent B amounts to 5.0 to 1.9.

3. Method according to claim 1, **characterised in that** the rubber A is hydroxy-functional and the cross-linking agents B have functional groups selected from isocyanate groups and acid anhydride groups.

4. Method according to claim 1, **characterised in that** a homopolymer or copolymer of butadiene or isoprene with functional groups selected from hydroxyl groups and acid anhydride groups is used as the rubber A.

5. Method according to claim 4, **characterised in that** the homopolymer or copolymer has a numerical-average molar mass Mₙ of 500 to 10,000g/mol.

6. Method according to claim 1, **characterised in that** a rubber selected from partially hydrogenated polybutadiene, partially hydrogenated copolymers of butadiene, partially hydrogenated polyisoprene, partially hydrogenated copolymers of isoprene, with functional groups selected from hydroxyl groups and acid anhydride groups, is used as the rubber A.

7. Method according to claim 1, **characterised in that** small-plate-like fillers or pigments F are used.

8. Coatings which can be produced by means of the method of claim 1.

## Revendications

1. Procédé pour le revêtement de substrats, comprenant les étapes de :
a) mélange de proportions en masse des constituants suivants :
| | |
|---|---|
| 10 à 90 % | d'au moins un caoutchouc A de faible poids moléculaire fonctionnalisé, dans lequel les groupes fonctionnels de A sont choisis parmi les groupes hydroxyle, les groupes anhydride d'acide carboxylique, les groupes carboxyle, les groupes amino et les groupes isocyanate, |
| 1 à 50 % | d'au moins un agent de réticulation B avec des groupes réactifs vis-à-vis des groupes fonctionnels du caoutchouc A, dans lequel les groupes fonctionnels de B sont choisis parmi les groupes hydroxyle, les groupes anhydride d'acide carboxylique, les groupes carboxyle, les groupes amino et les groupes isocyanate, avec la condition que les groupes fonctionnels des composants A et des composants B soient choisis de manière à former une liaison par la réaction entre ceux-ci choisis parmi les groupes uréthane, les groupes ester, les groupes urée et les groupes amide d'acide, |
| 0,01 à 10 % | d'accélérateurs/catalyseurs C pour la réaction de réticulation entre A et B, |
| 0 à 60 % | de diluant réactif D, |
| 1 à 50 % | de composés chimiques de vulcanisation E, |
| 5 à 50 % | de charges F et d'adjuvants G, |
la somme des proportions en masse dans le mélange devant toujours donner 100 %, et au moins une des fonctionnalités moyennes des constituants A ou B étant d'au moins 2,
b) dépôt du mélange préparé à l'étape a) sur un substrat, dans lequel, à la suite de la réaction du composant A avec le composant B, la viscosité du mélange augmente d'un facteur au moins 3 en 30 minutes et
c) vulcanisation du revêtement sur le substrat par chauffage.

2. Procédé selon la revendication 1, **caractérisé en ce que** la fonctionnalité moyenne de A s'élève à entre 1,5 et 5,0 et **en ce que** la fonctionnalité moyenne de l'agent de réticulation B est de 5,0 à 1,9.

3. Procédé selon la revendication 1, **caractérisé en ce que** le caoutchouc A est à fonctionnalité hydroxy et **en ce que** les agents de réticulation B présentent des groupes fonctionnels choisis parmi les groupes isocyanate et les groupes anhydride d'acides.

4. Procédé selon la revendication 1, **caractérisé en ce que** l'on utilise comme caoutchouc A un homo- ou copolymère du butadiène ou de l'isoprène avec des groupes fonctionnels choisis parmi les groupes hydroxyle et les groupes anhydride d'acides.

5. Procédé selon la revendication 4, **caractérisé en ce que** l'homo- ou copolymère présente une masse molaire moyenne en nombre Mₙ de 500 à 10 000 g/mole.

6. Procédé selon la revendication 1, **caractérisé en ce que** l'on utilise comme caoutchouc A un caoutchouc choisi parmi un polybutadiène partiellement hydrogéné, un copolymère du butadiène partiellement hydrogéné, un polyisoprène partiellement hydrogéné, un copolymère de l'isoprène partiellement hydrogéné, avec des groupes fonctionnels choisis parmi les groupes hydroxyle et anhydride d'acide.

7. Procédé selon la revendication 1, **caractérisé en ce que** l'on utilise des charges ou des pigments F en forme de plaquettes.

8. Revêtements pouvant être fabriqués au moyen du procédé selon la revendication 1.
